Europäisches Patentamt

European Patent Office

Office européen des brevets

(19)

(11) Publication number: **0 050 121**
**B1**

## (12) EUROPEAN PATENT SPECIFICATION

(45) Date of publication of patent specification: **27.06.84**

(51) Int. Cl.³: **B 23 B 29/12**

(21) Application number: **81900805.3**

(22) Date of filing: **25.03.81**

(86) International application number:
**PCT/SE81/00094**

(87) International publication number:
**WO 81/03635 24.12.81 Gazette 81/30**

(54) **TOOL BLOCK.**

(30) Priority: **03.04.80 SE 8002581**

(43) Date of publication of application:
**28.04.82 Bulletin 82/17**

(45) Publication of the grant of the patent:
**27.06.84 Bulletin 84/26**

(84) Designated Contracting States:
**DE FR GB**

(56) References cited:
**GB - A - 1 510 649**
**US - A - 3 838 500**

(73) Proprietor: **SECO TOOLS AB**
**Fack**
**S-773 01 Fagersta (SE)**

(72) Inventor: **GUSTAFSON, Manfred**
**Malmvägen 6 G**
**S-773 00 Fagersta (SE)**

(74) Representative: **Edholm, Sigurd**
**c/o SANDVIK AB**
**S-811 81 Sandviken (SE)**

Courier Press, Leamington Spa, England.

## Description

The present invention relates to a tool block comprising a cutting insert holder provided with a cutting insert and clamping means reciprocating between a clamping position and a releasing position for selectively clamping or releasing the insert, said clamping means being actuated in one direction by a spring loaded device and in the other direction by power means acting against the action of the spring loaded device.

A tool block substantially of this type is known from patent specification GB—A—1 510 649.

An object of this invention is to design the took block in such a way that exchange and indexing of the cutting insert is considerably simplified.

According to the invention the tool block defined above is characterised in that the cutting insert holder is part of the reciprocating clamping means and is slidably mounted in a cavity in the tool block oriented in the longitudinal direction thereof, and adapted to reciprocate between a clamping position and a releasing position, the clamping means also comprising a pivotally arranged lever, one end of which acts on the cutting insert holder while the other end of the lever cooperates with the spring loaded device, which when clamping the cutting insert acts on the lever so that the lever makes a pivoting movement and in its turn acts on the cutting insert holder, whereby the latter is moved in the tool block so that the cutting insert is clamped between a stop on the cutting insert holder and a stop fixed on the tool block, said spring loaded device, when releasing the cutting insert, being subjected to a compressive force acting against the action of the spring in the spring loaded device, whereby the influence of the lever on the cutting insert holder is counteracted, so that the cutting insert holder can be moved in the releasing direction, spring means being provided for effecting this movement.

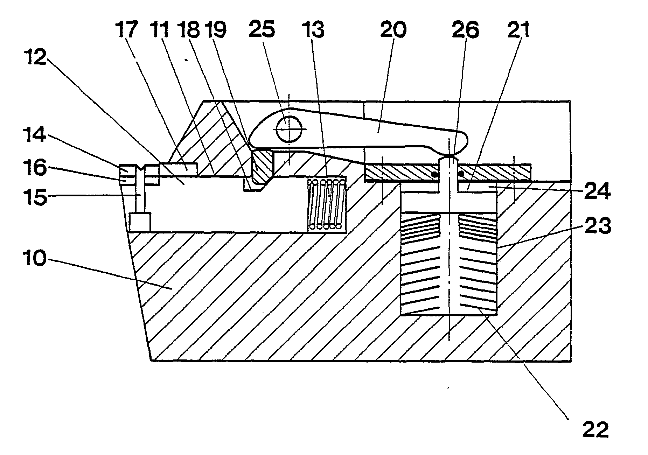

A preferred embodiment of the invention will be more closely described in connection with the accompanying drawing.

The tool block disclosed in the drawing comprises a longish holding body 10 in which is made a cavity 11 oriented in the longitudinal direction of the holding body 10, in which cavity a cutting insert holder 12 is movably arranged against the action of a spring 13. A cutting insert 14 provided with an aperture is positioned on a locking pin 15 projecting from the insert-receiving site for the cutting insert holder 12. The bottom support surface for the cutting insert is, as usual, formed by a separate support plate 16 of the same form as the cutting insert, while the back support for the cutting insert is formed by a stop 17 positioned on the stationary part of the tool block.

The cutting insert holder 12 is formed with a recess 18 in which a slide 19 arranged substantially parallel with the locking pin 15 shall be positioned. The recess 18 in section has the form of a parallel trapezoid, the beveled surface of which is the stop surface for the slide 19. The stop surface of the slide 19 is also beveled in order to cooperate better with the beveled surface of the recess 18. For influence upon the slide there is arranged a lever 20, one end of which acts upon the slide 19, while the other end of the lever cooperates with a projecting pin 26 of a plunger 21 of a pressure-cylinder 24, which is positioned in a cavity 23 oriented substantially parallel with the locking pin 15 in the tool block. A spring device 22 acts on the bottom side of the plunger 21.

The lever 20 is pivotally positioned on an axis 25, which is fixed in the tool block and is perpendicularly directed to the centre line of the cylinder 24. The two ends of the lever 20 are unattachedly resting against respectively the slide 19 and a pin 26 projecting from the plunger 21.

For releasing the cutting insert 14 a pressure medium, for instance air, from a suitable source is forced into the cylinder on the upper side of the plunger 21, whereby the plunger 21 is forced downwards against the action of the spring 22. The pressure of the lever 20 on the slide 19 is reduced, whereby the spring 13 can urge the cutting insert holder 12 outwards. In this way there is formed a gap between the back edge of the cutting insert 14 and the support 17, which permits removal of the cutting insert 14 from the insert receiving site.

After the exchange or indexing of the cutting insert the pressure in the cylinder 24 is removed, whereby the plunger 21 is forced upwards by the action of the spring 22. Then the pin 26 of the plunger 21 brings the lever 20 to pivot around the axis 25 and force the slide 19 into the recess 18 of the cutting insert holder 12. When the slide 19 is forced into the recess 18 the cutting insert holder 12 will move inwards against the action of the spring 13 until the cutting insert 14 rests against the support 17, the cutting insert being clamped by means of the locking pin 15 fixed to the cutting insert holder and the support 17.

The invention is not limited to the disclosed embodiment but can be varied within the scope of the filed claims.

Thus, as a pressure medium instead of air oil or other liquid or gaseous media can be used. Furthermore, the lever can be fixed to the slide and/or the plunger by mechanical joints or in another suitable way.

Moreover, the invention is not limited to a device for fastening cutting inserts provided with apertures but the inventive idea is also applicable to cutting inserts without apertures. In the latter case there cannot be a pin centrally projecting from the insert receiving site for fastening the cutting insert but this must be done with other arrangements, for instance an edge projecting from the insert receiving site and positioned in front of the insert.

## Claims

1. Tool block comprising a cutting insert holder (12) provided with a cutting insert (14) and clamping means movable between a clamping position and a releasing position for selectively clamping or releasing the insert, said clamping means being actuated in one direction by a spring loaded device (21, 22, 26) and in the other direction by power means (24) acting against the action of the spring loaded device characterized in that the cutting insert holder is part of the clamping means and is slidably mounted in a cavity in the tool block oriented in the longitudinal direction thereof and adapted to move between a clamping position and a releasing position, the clamping means also comprising a pivotally arranged lever (20) one end of which acts on the cutting insert holder (12) while the other end of the lever cooperates with the spring loaded device (21, 22, 26), which when clamping the cutting insert (14) acts on the lever (20) so that the lever (20) makes a pivoting movement and in its turn acts on the cutting insert holder (12) whereby the latter is moved in the tool block so that the cutting insert is clamped between a stop (15) on the cutting insert holder and a stop (17) fixed on the tool block, said spring loaded device (21, 22, 26), when releasing the cutting insert, being subjected to a compressive force (24) acting against the action of a spring device (22) in the spring loaded device (21, 22, 26), whereby the influence of the lever (20) on the cutting insert holder (12) is counteracted, so that the cutting insert holder can be moved in the releasing direction, means (13) being provided for effecting this movement.

2. Tool block according to claim 1, characterized in that the cutting insert holder (12) has a recess (18) in which a slide (19) cooperating with the lever (20) is positioned.

3. Tool block according to any one of the preceding claims, characterized in that the lever (20) is pivotally arranged on an axis (25).

4. Tool block according to any one of the preceding claims, characterized in that the spring loaded device (21, 22, 26) comprises a plunger (21) provided with a projecting pin.

5. Tool block according to claim 4, characterized in that the plunger (21) is movably arranged in a cylinder (24) which is arranged in a cavity (23) in the tool block.

6. Tool block according to claim 5, characterized in that the compressive force acting on the plunger (21) against the action of the spring device (22) when loosening the cutting insert (14), is formed by injection of a pressure medium, for instance air, into the cylinder (24) on the upper side of the plunger (21).

7. Tool block according to claims 3, 4 and 5, characterized in that the lever (20) is pivotally arranged on the axis (25) which is perpendicular to the centre-line of the cylinder (24), and that the two ends of the lever (20) are unattachedly resting against the slide (19) and the pin (26) of the plunger (21).

8. Tool block according to claim 2, characterized in that that part of the recess (18) and that part of the slide (19) cooperating with each other are provided with beveled surfaces.

9. Tool block according to any one of the preceding claims, characterized in that the cutting insert (14) is provided with an aperture, and that the cutting insert holder (12) is provided with a projecting locking pin (15) which clamps the cutting insert (14) against the stop fixed to the tool block.

## Patentansprüche

1. Werkzeugblock mit einem Schneideinsatzhalter (12) mit einem Schneideinsatz (14) und einer Klemmvorrichtung, die zwischen einer Klemmposition und einer Freigabeposition bewegbar ist, um den Einsatz wahlweise zu klemmen oder freizugeben, wobei die Klemmvorrichtung in einer Richtung durch eine federbelastete Vorrichtung (21, 22, 26) und in der anderen Richtung durch eine gegen die Wirkung der federbelasteten Vorrichtung wirkende Kraftvorrichtung (24) betätigt wird, dadurch gekennzeichnet, daß der Schneideinsatzhalter ein Teil der Klemmvorrichtung ist und gleitend in einer Höhlung im Werkzeugblock, und zwar in dessen Längsrichtung, angeordnet und so ausgebildet ist, daß er sich zwischen einer Klemmposition und einer Freigabeposition bewegen kann, daß die Klemmvorrichtung auch einen schwenkbar angeordneten Hebel (20) enthält, dessen eines Ende auf den Schneideinsatzhalter (12) einwirkt, während das andere Ende des Hebels mit der federbelasteten Vorrichtung (21, 22, 26) zusammenwirkt, die beim Klemmen des Schneideinsatzes (14) auf den Hebel (20) einwirkt, sodaß der Hebel (20) eine Schwenkbewegung ausführt und seinerseits auf den Schneideinsatzhalter (12) einwirkt, wodurch dieser in dem Werkzeugblock bewegt wird, sodaß der Schneideinsatz zwischen einem Anschlag (15) auf dem Schneideinsatzhalter und einem auf dem Werkzeugblock befestigten Anschlag (17) bewegt wird, wobei die federbelastete Vorrichtung (21, 22, 26) beim Lösen des Schneideinsatzes einer Druckkraft (24) unterworfen wird, die gegen die Wirkung einer Federvorrichtung (22) in der Federbelasteten Vorrichtung (21, 22, 26) wirkt, wodurch dem Einfluß des Hebels (20) auf den Schneideinsatzhalter (12) entgegengewirkt wird, sodaß der Schneideinsatzhalter in Freigaberichtung bewegt werden kann, und daß eine Vorrichtung (13) für die Ausführung dieser Bewegung vorgesehen ist.

2. Werkzeugblock nach Anspruch 1, dadurch gekennzeichnet, daß der Schneideinsatzhalter (12) mit einer Ausnehmung (18) versehen ist, in der ein mit dem Hebel (20) zusammenwirkender Schieber (19) angeordnet ist.

3. Werkzeugblock nach einem der vorhergehenden Ansprüche, dadurch gekennzeichnet, daß der Hebel (20) auf einer Achse (25) schwenkbar angeordnet ist.

4. Werkzeugblock nach einem der vorhergehenden Ansprüche, dadurch gekennzeichnet, daß die federbelastete Vorrichtung (21, 22, 26) einen mit einem vorspringenden Stift versehenen Kolben (21) enthält.

5. Werkzeugblock nach Anspruch 4, dadurch gekennzeichnet, daß der Kolben (21) in einem in einer Höhlung (23) im Werkzeugblock vorgesehenen Zylinder (24) angeordnet ist.

6. Werkzeugblock nach Anspruch 5, dadurch gekennzeichnet, daß die beim Lösen des Schneideinsatzes (14) gegen die Wirkung der Federvorrichtung (22) wirkende Druckkraft durch Einführung eines Druckmediums, z.B. Luft, in den Zylinder auf der Oberseite des Kolbens (21) erzeugt wird.

7. Werkzeugblock nach den Ansprüchen 3, 4 und 5, dadurch gekennzeichnet, daß der Hebel (20) schwenkbar auf der senkrecht zur Mittellinie des Zylinders (24) verlaufenden Achse (25) angeordnet ist und daß die beiden Enden des Hebels (20) unbefestigt an dem Schiebar (19) und dem Stift (26) des Kolbens (21) anliegen.

8. Werkzeugblock nach Anspruch 2, dadurch gekennzeichnet, daß der Teil der Ausnehmung (18) und der Teil des Schiebers (19), die miteinander zusammenwirken, mit Schrägflächen versehen sind.

9. Werkzeugblock nach einem der vorhergehenden Ansprüche, dadurch gekennzeichnet, daß der Schneideinsatz (14) mit einem Loch versehen ist und daß der Schneideinsatzhalter (12) mit einem vorspringenden Klemmbolzen (15) versehen ist, welcher den Schneideinsatz (4) gegen den am Werkzeugblock befestigten Anschlag klemmt.

**Revendications**

1. Bloc d'outil comportant un support (12) de plaquette de coupe comprenant une plaquette de coupe (14) et des moyens de serrage qui peuvent se déplacer entre une position de serrage et une position de libération pour, sélectivement, serrer et libérer la plaquette, lesdits moyens de serrage étant commandés dans un sens par un dispositif (21, 22, 26) chargés par ressort et, dans l'autre sens, par des moyens actifs (24) agissant contre l'action du dispositif chargé par ressort, caractérisé en ce que le support de plaquette de coupe fait partie des moyens de serrage et est monté coulissant dans une cavité du bloc d'outil qui est orientée dans la direction longtidudinale de celui-ci et agencé pour se déplacer entre une position de serrage et une position de libération, les moyens de serrage comportant également un levier (20) monté de manière pivotante, dont une extrémité agit sur le support (12) de plaquette de coupe et dont l'autre extrémité coopère avec le dispositif (21, 22, 26) chargé par ressort, lequel, au serrage de la plaquette de coupe (14), agit sur le levier (20) de manière que celui-ci effectue un mouvement de pivotement et, à son tour, agisse sur le support (12) de plaquette de coupe, celui-ci, se déplaçant dans le bloc d'outil de maînère que la plaquette de coupe soit serrée entre une butée (15) du support de plaquette de coupe et une butée (17) fixe sur le bloc d'outil, ledit dispositif (21, 22, 26) chargé par ressort, à la libération de la plaquette, étant soumis à une force de compression (24) agissant contre l'action d'un dispositif à ressort (22) prévu dans le dispositif (21, 22, 26) chargé par ressort, l'action du levier (20) sur le support (12) de plaquette de coupe étant contre-carrée, le support de plaquette de coupe pouvant ainsi être déplacé dans la position de libération, des moyens (13) étant prévus pour effectuer ce déplacement.

2. Bloc d'outil selon la revendication 1, caractérisé en ce que le support (12) de plaquette de coupe présente une cavité (18) dans laquelle est placé un coulisseau (19) coopérant avec le levier 20.

3. Bloc d'outil selon l'une des revendications précédentes, caractérisé en ce que le levier (20) est monté de manière basculante sur un axe (25).

4. Bloc d'outil selon l'une quelconque des revendications précédentes, caractérisé en ce que le dispositif (21, 22, 26) chargé par ressort comporte un plongeur (21) muni d'une broche en saillie.

5. Bloc d'outil selon la revendication 4, caractérisé en ce que le plongeur (21) est placé de manière mobile dans un verin (24) qui est monté dans une cavité (23) du bloc d'outil.

6. Bloc d'outil selon la revendication 5, caractérisé en ce que la force de compression agissant sur le plongeur (21), contre l'action du dispositif à ressort (22), à la libération de la plaquette de coupe (14), est obtenue par injection d'un milieu sous pression, par exemple de l'air, dans le vérin (24) sur le côté supérieur du plongeur (21).

7. Bloc d'outil selon les revendications 3, 4 et 5, caractérisé en ce que le levier (20) est monté de manière basculante sur l'axe (25) qui est perpendiculaire à l'axe central du vérin (24), et en ce que les deux extrémités du levier (20) reposent sans fixation contre le coulisseau (19) et contre la broche (26) du plongeur (21).

8. Bloc d'outil selon la revendication 2, caractérisé en ce qu'une partie de la cavité (18) et une partie du coulisseau (19), coopérant l'une avec l'autre, présentent des surfaces en biseau.

9. Bloc d'outil selon l'une quelconque des revendications précédentes, caractérisé en ce que la plaquette de coupe (14) présente une ouverture et en ce que le support (12) de plaquette de coupe comporte une broche (15) de verrouillage en saillie qui serre la plaquette de coupe (14) contre la butée fixe du bloc d'outil.